# EUROPEAN PATENT SPECIFICATION

(11) **EP 2 681 101 B1**
(45) Date of publication and mention of the grant of the patent: **10.08.2016**
(21) Application number: 11729771.3
(22) Date of filing: 28.04.2011
(51) Int. Cl.: B62D 25/20, B62D 33/02, B62D 29/00, B62D 24/02

(54) **MODULAR COUNTERFRAME FOR TRUCKS TO ANCHOR DEVICES FOR HANDLING AND TRANSPORTING INTERCHANGEABLE BODIES**
MODULARE GEGENZARGE FÜR LASTKRAFTWAGEN ZUR VERANKERUNG VON VORRICHTUNGEN ZUM HANDHABEN UND TRANSPORTIEREN VON WECHSELAUFBAUTEN
SOUS-CHÂSSIS MODULAIRE POUR CAMIONS, SERVANT À ANCRER DES DISPOSITIFS POUR LA MANUTENTION ET LE TRANSPORT DE CAISSES INTERCHANGEABLES

(30) Priority: 01.03.2011 IT MI20110321
(43) Date of publication of application: 08.01.2014
(73) Proprietor: Pris-Mag S.r.l., 20059 Vimercate MI (IT)
(72) Inventor: SALA Alessandro, I-20059 Vimercate - Fraz. Oreno Milano (IT)
(74) Representative: Guella, Paolo
(86) International application number: PCT/IT2011/000133
(87) International publication number: WO 2012/117428

(56) References cited:
- DE-A1- 3 543 929
- GB-A- 2 060 514
- NL-C2- 1 002 090
- NL-C2- 1 024 466

## Description

### Field of application of the invention

The present invention concerns the field of industrial structures and in particular a modular counterframe for trucks to anchor devices for handling and transporting interchangeable bodies.

### Review of the known art

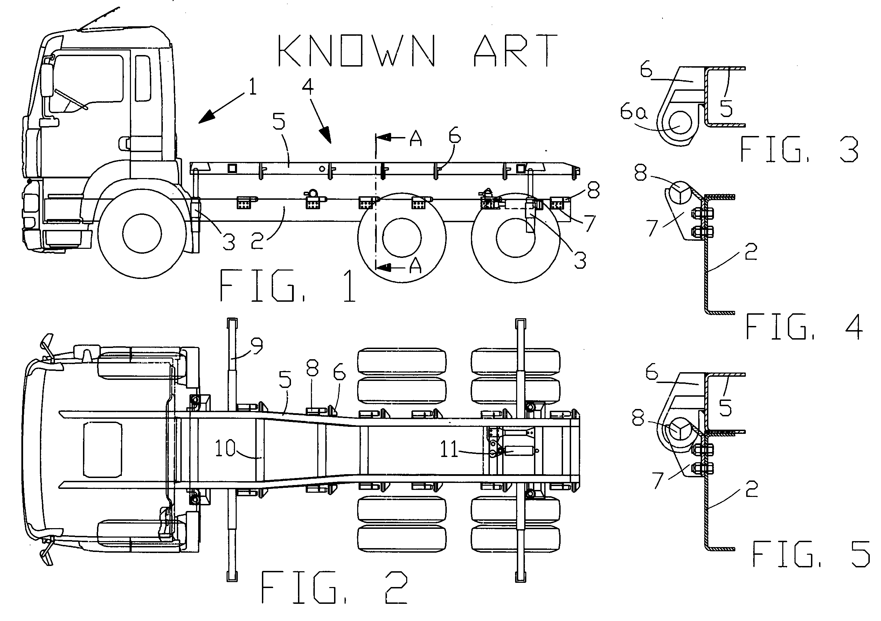

In the technical field referred to above, 'bodies" mean structures fixed to the frame of a truck to specialize it in carrying out a particular type of transport or handling in situ. Examples of trucks with different bodies may be: fixed truck bodies, dump bodies, cranes, pneumatic drills, cement mixers, excavators, drainage tanks, and others. Such bodies can be permanently fixed to the truck so limiting it to a single use, or temporarily for their transport and some particular purpose, after which the bodies concerned can be removed leaving the truck ready to use for a different one. Obviously a motor vehicle built to carry dismountable bodies can offer a more versatile service than one unable to do this, a versatility considerably increased if the bodies of different types carried are also interchangeable. Fitting up a truck to carry such interchangeable bodies involves adding hydraulic devices to the frame with which to manoeuvre the body, parts to block/release the body to/from the frame, and fast-release joints for the hydraulic, pneumatic, electrical and other power consuming units. Over the years the Applicant has worked out, and patented, technically advanced designs for fitting up a truck and making it fully independent in the stages of mounting, transporting, and dismounting the interchangeable bodies. **Figures 1** to **9** show the preparatory means produced and put on sale by the Applicant for interchangeable bodies.

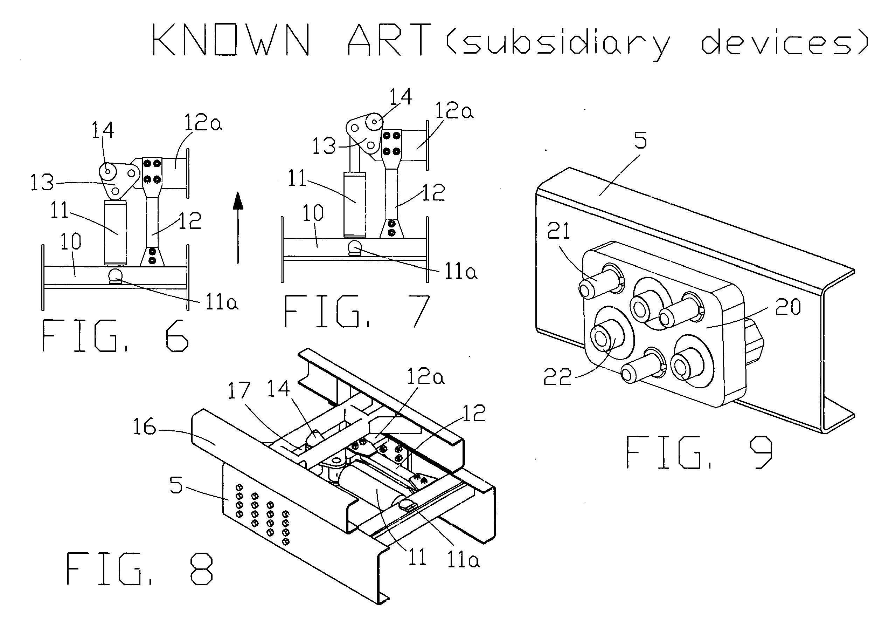

**Figure 1** is a side view of a three-axis truck 1 to whose frame perimetric hydraulic cylinders 3 are constrained. The cylinders 3 support a counterframe 5 keeping it raised above the frame 2 to which a dismountable body (not shown) can be anchored. The frame 2 and the counterframe 5 are rigid structures consisting of two side members joined by cross members. Brackets 6, reciprocally spaced, are welded to the side members of the counterframe 5 along their entire length. The holes in the brackets 6 are aligned along an axis parallel to the side members 5. Plates 7 are bolted onto the side members of frame 2 to support respective pins 8 longitudinally aligned and spaced one from another like the brackets 6. The combination of brackets 6 and pins 8 makes it possible to fix the counterframe 5 to the frame 2 for mounting the body (not shown). For this purpose hydraulic coupling devices are provided. **Figure 2** is a view from above of the truck in Figure 1 after fitting four support legs 9 into seats in the side members of the counterframe 5. The pins 8 are external to the respective brackets 6 so that the truck 1 can either be extracted from the body, or the support legs 9 be removed, the body lowered and coupled on. As **Figure 2** shows, the base of a hydraulic jack 11 for activating a mechanism for coupling the body, is hinged to a cross member 10 of the counterframe 5 by a hinge 11a. **Figure 3** shows a front view of a bracket 6 welded to the side member 5; through the bracket there is a longitudinal hole 6a. **Figure 4** shows a front view of a pin 8 welded to the plate 7 in turn bolted to the side member 2 so that the pin lies parallel to side member 2 at the same distance from it as the axis of hole 6a from the side member 5. **Figure 5** shows a configuration in which the hydraulic cylinders 3 have lowered the counterframe 5 till it rests on the frame 2 and till the pins 8 fit into the holes 6a in the brackets 6, keeping the body anchored to the frame of the truck 1 during transport and handling. **Figure 6** is a view from above of the joint mechanism that produces the final configuration in Figure 5. This mechanism comprises a triangular cam 13 of which: a) a first vertex is pivoted at the end of the piston of the hydraulic jack 11; b) a second vertex is pivoted on a transversal arm 12a to which one end of a lateral reinforcing support 12 is also connected, the other end of said support being constrained to the cross member 10; c) at the third vertex a strong tapered pin 14 is free to rotate. In Figure 6 the piston is completely withdrawn. **Figure 7** shows the configuration with the piston fully extended and the pin 14 rotated at 90° together with the triangular cam 13 around the pin constrained to the transversal arm 12a. **Figure 8** shows a perspective of the configuration in Figure 7, with a support 16, the same for the various structures, superimposed over the counterframe 5, forming a rectangular opening 17 for holding the tapered pin 14. In the final positions shown in **Figures 7** and **8****,** advance of the piston has caused rotation of the triangular cam 13 and simultaneous advance of the cross member 10 in the direction indicated by the arrow (about 10 cm) and, with it, the superstructure. Translation of the counterframe 5 has moved the brackets 6 towards the pins 8 fixed to the frame 2 until said pins are fully fitted into holes 6a. This is possible because ground friction due to the weight of the truck 1, together with the body carried, is greater than the friction caused by side members 5 sliding against side members 2, also because lateral thrust exerted by the hydraulic jack 11 on cross member 10 through the hinge 11a, is not sufficient to overcome the friction.

**Figure 9** is a perspective from the front of one component of the two, male and female, that form a fast-release hydraulic joint., respectively mounted on the frame 2 of the truck 1 and on the counterframe 5, or vice versa. The figure only shows the male component contained in a plate 20 anchored by shock absorbers to counterframe 5 as shown by disposition 4. Three identical pegs 21 project orthogonally from the plate 20, set at the vertices of a triangle, and three identical tubular terminals 22, also set at the vertices of a triangle rotated at 180° in relation to the first. Each component is connected to three respective flexible pipes (not shown) so that the hydraulic power provided by the pump on the truck can be used by the actuators forming part of the body. The plates are so arranged that the constraint between the two components of the fast-release hydraulic joint is synchronized with that between pins 8 and brackets 6, contact pressure of more than 450 bar being available. The truck fitted with one half of the hydraulic joint and the body with the other half hydraulic joint, the two halves being joined parallelly to the side frames of the truck frame, is the subject of European Patent EP 1775159 B1 granted to the Applicant.

A modular counterframe joinable to the frame of a truck is disclosed in NL 1 024 466 C2. In particular, said Dutch patent discloses a vehicle bodywork assembly for installation on a chassis with longitudinal beams. The bodywork is fitted on the chassis with fixture head bolts. It has at least a basic frame with basic frame longitudinal beams positioned on the vehicle longitudinal beams. The basic frame comprises extruded aluminium profiles and assembly plates are provided for fitting with the aid of the fixture head bolts of the basic frame longitudinal beams on the chassis longitudinal beams. The basic frame longitudinal beams have an extruded aluminium profile, with an under side for location on the chassis longitudinal beam of a vehicle, a parallel upper side and with left and right side surfaces between the upper and lower sides. At least one side channel runs in a longitudinal direction and via an open side slot emerges onto a side surface.

### The technical problem

The known art described in detail is symptomatic of the methods currently in use in the field of devices fitted to road transport means to adapt them for carrying bodies of various kinds. Coincident points must first be identified in the truck and in the interchangeable body concerned, so that reciprocal coupling means can be fixed. Space must also be found in the truck for the hydraulic system, for its tank and oil cooler, for the perimetric jacks, for the fast-release hydraulic half joint, for a panel with controls for the hydraulic, electrical and pneumatic systems, and for whatever else may be required. Similar, if more easily decided, it needs acting concerning the bodies. The needs of those in charge of preparatory work on the truck do not always coincide with the characteristics of the truck concerned, partly because of lack of free space on the frame, partly because of difficulties over moving some components to create space, movements that the makers are not always able to authorise on account of the peculiarities, or size, of the body to be installed, sometimes of considerable size.

Problems such as these can only be solved by a small number of specialized firms, in turn employing personnel specialized in this kind of work. Fitting up a truck takes at least thirty days work by three technicians, and means a loss of profit for the owner whose vehicle is standing idle.

### Purpose of the invention

Purpose of the present invention is therefore to overcome the drawbacks in the known art, especially that of having to find sufficient space on the vehicle for the devices indicated above or else make do in some way with the space available on it. The purpose is therefore to find a satisfactory solution that facilitates the operations of fitting up trucks for transport of interchangeable bodies.

### Summary of the invention

To achieve these purposes, subject of the present invention is a modular counterframe joinable to the frame of trucks to be fitted out for transport of interchangeable bodies, said counterframe being anchorable to said interchangeable body, the counterframe including:
- a pair of side members each having at least one longitudinal groove along the entire length of a first side;
- at least one cross member joinable orthogonally to the two side members;
- means for joining the side members to the frame;
- means for anchoring the interchangeable bodies to the side members;
- second hydraulic means fixed to said cross member by means of fixing means, said second hydraulic means being able to activate a mechanism for moving an interchangeable body lengthwise the side members, in either a direction or the opposite one, to fix the interchangeable body to said anchoring means;
- means for fixing said joining means and said anchoring means to the side members, said means for fixing said joining means and said anchoring means being able to translate in said groove without transversal departure therefrom, positioning themselves at said joining means and at said anchoring means.

According to one aspect of the invention said joining means are first drilled plates to be coupled to said means for fixing said joining means and said anchoring means.

According to one aspect of the invention, said anchoring means are second drilled plates to be coupled to said means for fixing said joining means and said anchoring means.

According to one aspect of the invention said means for fixing said joining means and said anchoring means are screws and nuts, the screw head having a profile that allows it to translate in said groove but not to rotate to allow the nut to be tightened.

According to one aspect of the invention, the screw head is prismatic. The edges of the prismatic head are preferably rounded.

According to one aspect of the invention, each side member includes a second groove, identical to the first, on the same longitudinal face, and at least one central hollow space to lighten the weight.

According to one aspect of the invention, each side member includes a second groove, identical to the first, on the opposite face and at least one central hollow space to lighten the weight.

According to one aspect of the invention, each side member includes a second groove, identical to the first, on the same longitudinal face, a further two grooves on the opposite face, identical to the first, and at least one central hollow space to lighten the weight.

According to one aspect of the invention, said groove is a cavity open at the two ends and of a height greater than the distance between the edges of the longitudinal opening.

According to one aspect of the invention, second plates are constrained to respective pins parallel to the side member, for attachment to respective brackets fixed to the body.

According to one aspect of the invention, other second plates matchable to said means for fixing said joining means and said anchoring means slidable inside at least a second longitudinal groove along the entire length of a second side, opposed to the first one, of the side members, are bent at 90° to engage said frame as a thrust block.

According to one aspect of the invention, some second plates are constrained to first hydraulic means for raising from the counterframe and lowering on the counterframe a said interchangeable body while maintaining its horizontal position.

According to one aspect of the invention, the counterframe includes four drilled corner-boxed angles joinable to said cross member and to said side members by said means for fixing said joining means and said anchoring means slidable inside at least a second longitudinal groove along the entire length of a second side, internal to the counterframe, of the side members.

According to one aspect of the invention, some second plates are constrained to supporting means of at least a plate which includes a hydraulic fast-release half joint matchable to a complementary hydraulic fast-release half joint constrained to said interchangeable body, by effect of the thrust exerted by the second. hydraulic means.

According to one aspect of the invention:
- said cross member has its ends constrained to said second plates matchable to said means for fixing said joining means and said anchoring means slidable inside at least a second longitudinal groove along the entire length of a second side, internal to the counterframe, of the side members;
- said cross member supports a plate which includes a hydraulic fast-release half-joint matchable to a complementary hydraulic fast-release half-joint constrained to said interchangeable body, by effect of the weight of the interchangeable body lowered by the first hydraulic means;
- other second plates matchable to said means for fixing said joining means and said anchoring means are constrained to means for blocking the interchangeable bodies manually operated.

### Advantages of the invention

The advantage offered by the modular counterframe is to free the empty spaces on the frame of the truck from those on the body. This is a considerable advantage as better use can be made of the free spaces in addition to simplifying the preparatory arrangements.

It should be explained that the invented counterframe is not an ensemble of all the components virtually joinable to it partly because their present and future nature and number would be hard to foresee; rather is it a flexible interface for all the possible trucks to be fitted up and for all possible bodies. As such it must perforce be modular - perhaps supplied to the user in kit form - and must include all the elements needed for assembling a certain number of components, such as grooved side members, cross members, joining plates, prismatic-headed screws and the nuts to go with them.

The invented counterframe also permits greater flexibility in engaging the hydraulic joint serving the bodies; a variant can in fact now be realized in which coupling takes place along a vertical axis and is held in place by the weight of the body.

### Short description of the figures

Further purposes and advantages of the present invention will be made clear by the following detailed description of an example of its realization and by the attached drawings provided purely for explanatory purposes in no way limitative, wherein:
**Figure 1** is a side view of a truck fitted up for transporting interchangeable bodies according to the known art;
**Figure 2** is a view from above of the truck as it appears in Figure 1;
**Figures 3, 4, 5** are front views of some devices used in fitting up the truck as in figure 1;
**Figures 6** to **9** are views of known devices belonging to the fitting up as in figure 1;
**Figure 10** is an exploded view of elements that compose the counterframe according to the present invention;
**Figures 11, 11A, 12, 12A, 13, 13A, 14** are cross-section views of examples of side members utilizable for the counterframe in Figure 10;
**Figure 14A** is an exploded view of part of the side member in Figure 14;
**Figure 14B** shows the side member in Figure 14 with joins to the counterframe in Figure 10;
**Figure 15** is an exploded view of a bolt to be coupled to a side member of the counterframe in Figure 10;
**Figure 16** is an exploded view of one end of the side member in Figure 14A and of some bolted parts;
**Figure 17** is a section view of a lateral thrust device seen in Figure 10;
**Figure 18** is a perspective view of a cross member seen in Figure 10;
**Figure 19** is a perspective view of an angle for fixing the cross member;
**Figure 20** is a perspective view of the counterframe in Figure 10 without joining plates;
**Figure 21** is a perspective view of the frame of the truck in Figure 1;
**Figure 22** is a perspective view of the frame of a truck fully assembled for coupling and transporting interchangeable bodies by means of the modular counterframe in Figure 10.
**Figure 23** is a perspective view that differs from the one in Figure 22 in that a change has been made to the mechanism for coupling the interchangeable bodies to the counterframe due to a different disposition of means for anchoring a fast-release hydraulic half joint to the counterframe.

### Detailed description of some preferred forms of realizing the invention

In the following description identical parts that appear in different figures may be marked with the same symbols. In describing a figure reference may be made to parts not expressly shown in that figure but in preceding figures. Scales and proportions of the various parts shown do not necessarily correspond to real ones.

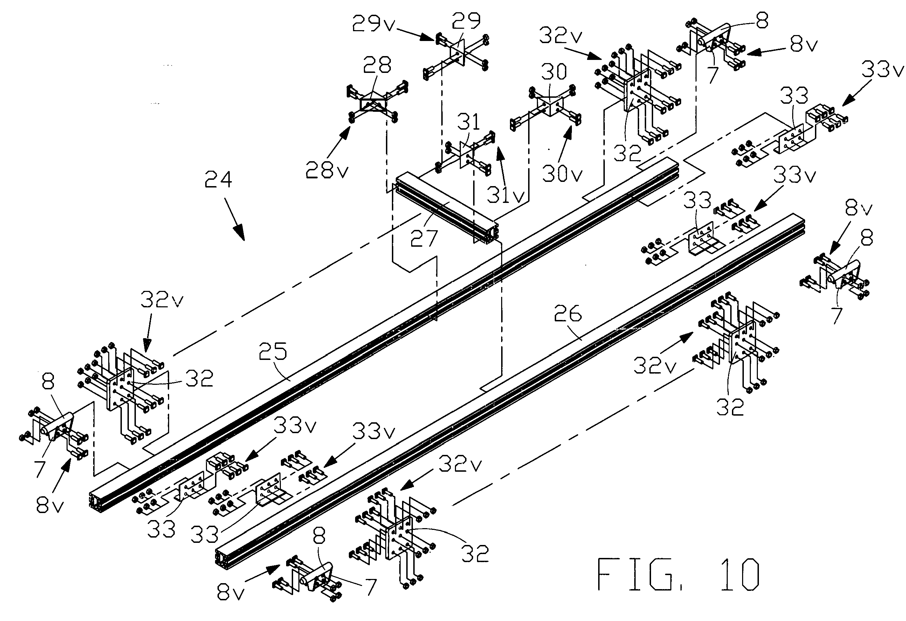

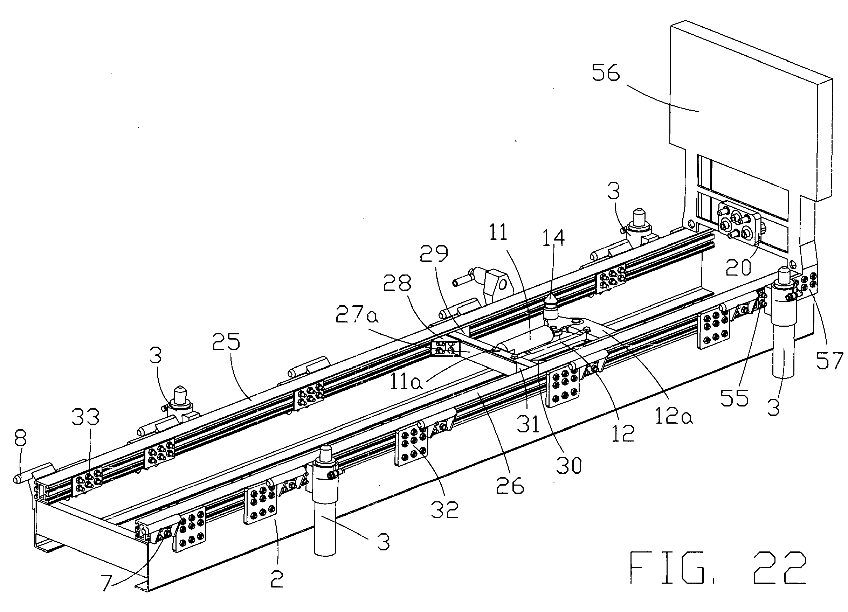

**Figure 10** shows the chief parts of a modular counterframe 24 easy to assemble and mount on the frame of a truck to simplify instalment of interchangeable bodies. The counterframe 24 comprises two side members 25, 26 and at least one cross member 27 joined orthogonally to the two side members by four corner-boxed angles 27, 28, 29, 30 fixed to the cross member and to the side members by two bolts for each face at 90°, respectively marked 27v, 28v, 29v, 30v. The side members 25, 26 and, if desired, the cross member 27, are steel section bars variously grooved along their entire length as follows: each side member is a longitudinal parallelepiped in which there is a central cavity to reduce weight, two flat longitudinal opposite faces without grooves, each of the other two longitudinal faces comprising two superimposed grooves that remain unaltered along the whole length permitting insertion and translation of the head of screws and bolts fixing them to the plates that join them to the frame of the truck and to other plates supporting devices useful in the preparatory work. The position given to the cross member 27 on the side members is therefore arbitrary, as are those of the following elements. Joined by four bolts 8v towards the ends of the side members, 25, 26, and to the side members only, are brackets 7 for pins 8. Fixed adjacent to brackets 7, 8 on the opposite face of side members 25, 26 are thrust plates 33 consisting of two orthogonal faces, one of which is fixed by four screws 32v to the respective side member while the other face lies against an inner face of the C-shaped frame of the truck. Further inside the counterframe, joining plates 32 are fixed by bolts 32v to the two side members 25, 26 and to the frame of the truck by the same 32v bolts or else by bolts with hexagonal-head screws. There may be other parts as well but Figure 22 shows the complete ensemble.

The structure of the side member doubly grooved on opposite faces is preferable because of its greater flexibility in use, and because the joining plates 32, brackets 7, thrust plates 33 and corner-boxed angles 28, 29, 30, 31 are more securely fixed to it without limiting the invention. Further structures will be described later. With a side member structure such as this, the holes in the joining and supporting parts listed just above are arranged in two parallel rows; holes 32v in the joining plates 32 have a third row of holes spaced farther away, said third row extending beyond the edge of the side member to intercept the frame of the truck. Neither does the fact that cross member 27 is grooved in any way limit the invention; what makes the longitudinal position of cross member 27 arbitrary is the possibility of translation by the bolts that fix the corner-boxed angles 28, 29, 30, 31.

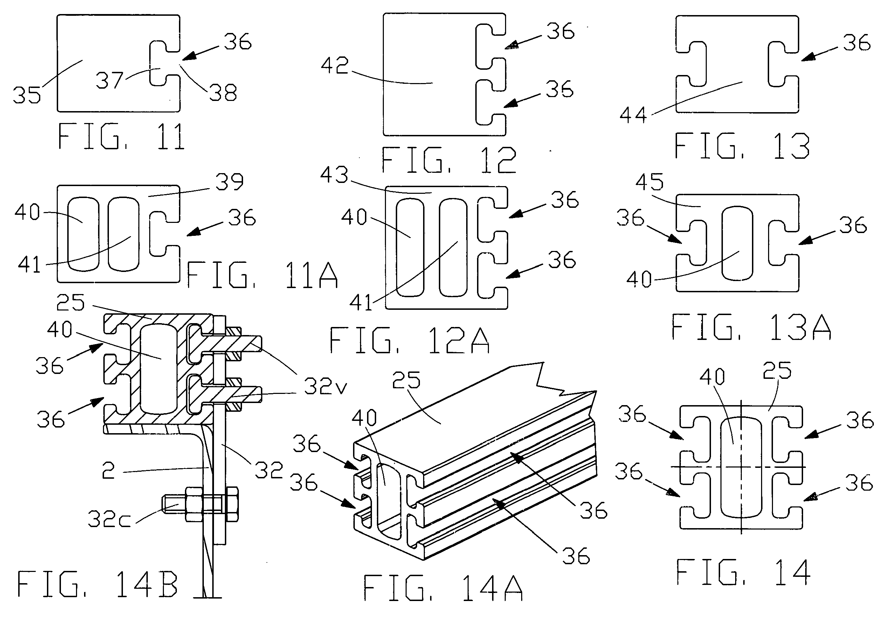

**Figure 11** shows, in a cross section, the structure of a side member 35, the simplest possible for realizing the countershaft 24 though not the best. Side member 35 is solid except for a groove 36 that extends unaltered along the entire length. Groove 36 consists of a cavity 37 open at the two ends and as long as a face of member 35 at an opening 38 of a width less than the height of said cavity 37. The transversal profile of groove 36 is identical, in negative, to the transversal profile of the screw seated there. Side member 35 is not high but it is heavy and costly and does not allow the thrust plate 33 to be fixed on the side of side member 25, 26 opposite the side where pin 8 is fixed. A reduction in weight is made by side member 39 as seen in **Figure 11A****,** which differs from the preceding one only because it has two longitudinal cavities 40, 41 to lighten the weight. Side member 39 is ineffective on its side opposite groove 36. The pair of side members 42, 43 respectively shown in **Figures 12, 12A** differ from the pair 35, 39 only because they have two grooves 36 one above the other, offering the advantage of a more secure fixing of the plates with a double row of bolts. Side members could also have more than two superimposed grooves but the benefits so obtained would not justify the increased height, unless extraordinarily heavy bodies were being carried. Side member 44 in **Figure 13** differs from that in Figure 11 as it has another groove 36 on the face opposite that containing the first groove. The groove on the opposite side increase flexibility in use of side member 44, and its whole length can also be more intensively exploited; further, thrust plate 33 can be fixed onto the side of side member 25, 26 opposite that where pin 8 is fixed. Side member 45 in **Figure 13A** is still side member 44 which has a central hollow space for lightening the weight. Side member 25, in **Figures 14** and **14A** should be the best structure as it is light and has two grooves on both its lateral faces.

**Figure 14B** shows a cross section of the connection between the join plate 32 and side member 25 and to frame 2 of truck 1. It will be seen that the heads of two screws 32v, belonging to two superimposed rows of three screws each, are included in respective longitudinal cavities 37, their shanks emerging from longitudinal openings 38 penetrating respective holes in the plate 32 and being fixed by two respective bolts. Aligned with the two screws 32v, a hexagonal-headed screw 32c enters the hole in plate 32 and a hole in frame 2 where it is tightened by a bolt to complete the joint. Grooves 36 on the other face are free for other joints.

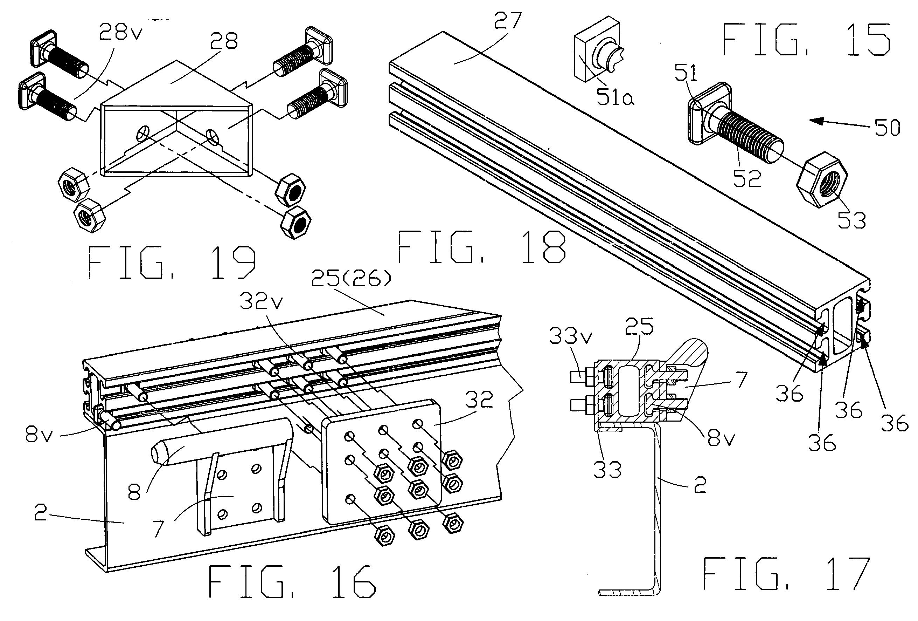

**Figure 15** shows in perspective a bolt 51 whose screw can be used in the longitudinal grooves 36 in side members 25 and 26. The head 51 of the screw is prismatic in shape with rounded edges to facilitate insertion and translation in contact with the walls of cavity 37. The rounded edges are useful but this does not place a limit on the prismatic shape of the head, parallelepiped 51a in particular. Another function of the head 51, 51a is to prevent rotation inside the cavity 37 in groove 36 and this permits the nut 53 to be tightened. A further peculiarity of the head 51, 51a is to provide a wider supporting base against the wall that delimits opening 38 and renders plate tightening more certain. The diameter of shank 52 permits little clearance at the entrance 38 to the groove. The nut 53 can be reinforced by a lock nut. The bolts 50 are important for the preparatory work and require special metallurgical treatments.

**Figure 16** gives a perspective view of the end of side member 25 belonging to the counterframe 24 superimposed over side member 2 part of the frame of a truck to prepare for transporting an interchangeable body. The end of side member 25 is constrained to side member 2 by joint plate 32 and three rows of bolts of which two rows fix the plate 32 to side member 25 and one row fixes the plate 32 to side member 2 of the truck frame. The exploded view shows the two superimposed rows of screws 32v whose heads are already in the respective cavities 37 at the desired position in groove 36, the shanks emerging through openings 38. The bracket 7, to which the pin 8 is welded, is to be fixed to side member 25 only; the head of screw 8v can be seen entering cavity 37 in grooves 36.

**Figure 17** shows a cross section of the flat two-sided plate 33 functioning as a thrust plate to pin 8. The short side of thrust plate 33 is firmly held against, and inside, the upper wall of side member 2 by two bolts 33v that fix the longer side of the thrust plate to the grooved face of side member 25 opposite that to which the bracket 7 is fixed. Thrust side plates 33 serve to neutralize the force exerted on pins 8 when the body is being coupled to the counterframe 24, during transport and while the body is operative. This is done by fixing the side members 25, 26 of the counterframe to the frame of the truck on the side opposite the pins 8 so preventing the thrust on the pins 8 from lifting the counterframe 24 above the frame.

**Figure 18** shows a perspective view of the cross frame 27, identical to side members 25, 26 except that it is shorter. **Figure 19** shows the corner-box angle 28 with two superimposed holes in each rectangular face joined at 90° to be tightened by bolts 28v respectively to side member 25 and to cross member 27.

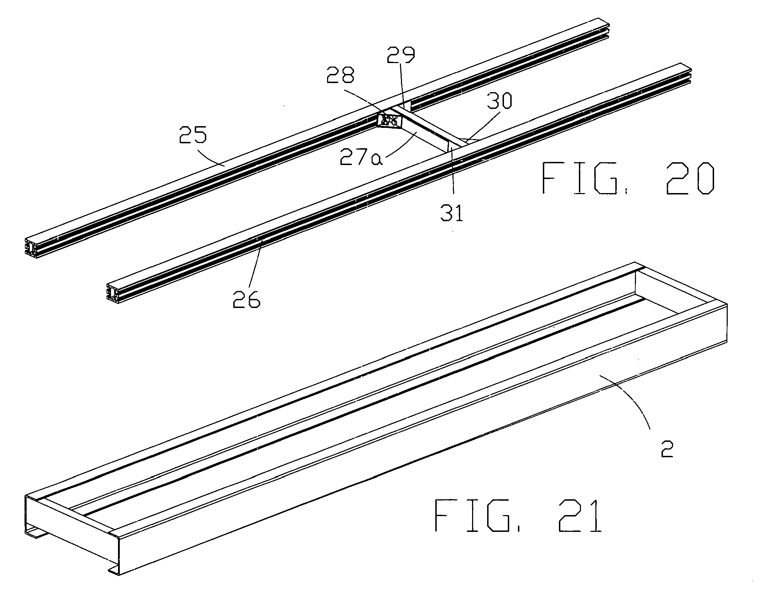

**Figure 20** shows the modular counterframe limited to assembly of the two side members 25, 26 and of one cross member 27a, without a groove and in a convenient position. **Figure 21** is a view of frame 2 of the truck to be prepared.

The upper assembly can be superimposed over the frame 2; in other words, the faces without grooves of side members 25, 26 rest on the upper faces of the side members of frame 2 with the grooved faces at the sides.

As an example, **Figure 22** shows the counterframe 24 assembled with all the parts that were previously assembled straight onto the frame of the truck 1 as shown in Figures 1 and 2, to prepare it for the interchangeable bodies. With reference to **Figure 22****,** the assembly there given includes the following parts:
- two grooved side members 25 and 26;
- one cross member 27 or 27a and four boxed-corner fastening devices 28, 29,30,31;
- an arbitrary number of joint plates 32 for joining to the frame 2;
- an arbitrary number of pins 8 welded to their brackets 7 for coupling the interchangeable body;
- a number of thrust blocks 33 equivalent to the number of pins 8;
- at least four hydraulic jacks 3 for lifting the interchangeable body, and plates 55 for coupling it to side members 25 and 26;
- one hydraulic jack 11 to manoeuvre the mechanism for coupling the bodies (14, 6, 8) and relative lateral support 12, transversal arm 12a, and hinge 11a for fixing it to the cross member 27 or 27a;
- a stop plate 56 for the bodies placed immediately after the cabin from which two vertical arms extend, respectively fixed to side members 25, 26 by respective fixing plates 57. Two horizontal parallel arms are fixed to the two vertical arms of the stop plate 56 by their ends. Between the horizontal arms, plate 20, that sustains a fast-release hydraulic joint to make operative the equipment to be dismaunted, is supported and held in position.

The hydraulic jack 11 is placed so that it pushes forward the body to be coupled while the piston is extending, hydraulic coupling taking place simultaneously with maintenance of the connection. The hydraulic jack 11 can also be connected so that the piston extends in a direction contrary to that shown in **Figure 22** without any change in the position of plate 20 on the hydraulic half-joint. In that case the hydraulic joint is coupled when the piston is withdrawn. A configuration of this kind can be used with what are known as reversible bodies.

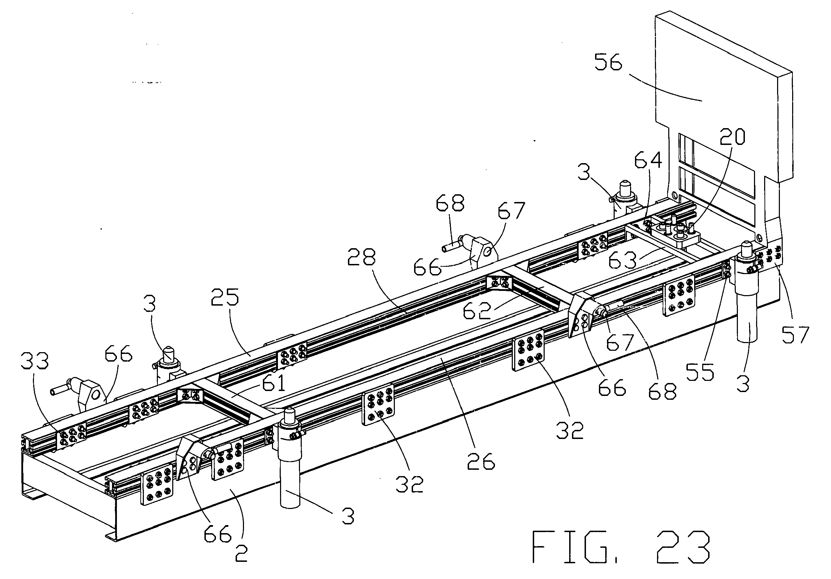

**Figure 23** shows a variant in which a cross member 63 of the counterframe is used to sustain the hydraulic junction 20 and place it so that it can be coupled along the vertical axis when the operation of lowering horizontally the body by the hydraulic jacks 3 has been completed. In line with this, the counterframe comprises plates to anchor a manual means for coupling the bodies. Therefore, compared with the preceding figure 22, there are no pins 8 and hydraulic jack 11 for moving the body-coupling mechanism 14, 6, 8. It will be seen that, in **Figure 23****,** there are two cross members 61, 62, identical to cross member 27 and joined by angle bars in the same way to side members 25, 26, as well as a third cross member 63 consisting of two parallel arms the ends of which are constrained to two respective opposite plates 64. Like plate 7, in plates 64 there are two rows of holes for bolting them to side members 25, 26 by bolts 8v. The two arms of cross member 63 sustain and lock plate 20 of the hydraulic half-joint in a horizontal position leaving the rear of the plate free for tubular connections. Manual devices are also bolted to the counterframe for locking the bodies to it once they have been put in place. Each device consists of a support 66 for a screw pin 67 operated by a handle 68. In the lower part of support 66 are two rows of holes for bolting it to side members 25, 26 by bolts 8v, and in the upper part a central hole for insertion of pin 67 transversally to the side members. On moving forward pin 67 penetrates into a corresponding hole in the body to prevent it from translating.

A method can also be described for fitting up a truck with means to adapt it for transporting interchangeable bodies. This includes the following steps:
- identify suitable points along the longitudinal profile of the body for placing fixing means to the frame, and fix said means to the body;
- identify free spaces along the longitudinal profile of the frame of the truck, and drill holes;
- place in order, according to their lesser distance from the truck cabin, said suitable points on the body and said free spaces in the frame;
- construct a counterframe consisting of two longitudinally-grooved side members joined by a cross member and rest said counterframe on the frame of the truck;
- insert a first group of screws with prismatic heads in the grooves of the counterframe and cause them to translate over the same distance from the cabin as the first element placed in the above order, then fix the counterframe to the frame, if said element is a joint, or fix a means for coupling the body to the counterframe;
- repeat the preceding step for all the elements placed in the above order and then proceed with coupling the body.

The above method can be used to assemble the various devices needed in the preparatory work in which case all must be included in the above order. Apart from the initial sorting, the method has the advantage of separating the free spaces in the frame from those in the body. In this way a better use to be made of any space available.

Based on the description given of a preferred example of realization of the invention, some changes can obviously be made by an expert in the field without thereby departing from the sphere of the invention as will be clear from the following claims.

## Claims

1. Modular counterframe (24), joinable to the frame (2) of a truck (1) to be fitted out for transport of an interchangeable body, said counterframe (24) being anchorable to said interchangeable body and including:
- a pair of side members (25, 26) each having at least one longitudinal groove (36) along the entire length of a first side;
- at least one cross member (27, 63) joinable, orthogonally, to the two side members (25, 26);
- means (32, 33) for joining the frame (2) to the side members (25, 26);
- means (7, 8) for anchoring said interchangeable body to the side members (25, 26);
- means (32v, 8v, 33v) for fixing said joining means (32, 33) and said anchoring means (7, 8) to the side members (25, 26), said means (32v, 8v, 33v) for fixing said joining means (32, 33) and said anchoring means (7, 8) being able to translate in said groove (36) without transversal departure therefrom, positioning themselves at said joining means (32, 33) and at said anchoring means (7, 8),
said counterframe (24) being **characterized in that** said joining means comprise first drilled plates (32) fixable to said frame (2) and to be coupled to said means (32v) for fixing said joining means (32, 33) and said anchoring means (7, 8), said anchoring means comprising second drilled plates (7, 33) to be coupled to said means (8v, 33v) for fixing said joining means (32, 33) and said anchoring means (7, 8),
said means (32v, 8v, 33v) for fixing said joining means (32, 33) and said anchoring means (7, 8) being screws and nuts, the screw head (51, 51a) having a prismatic profile that allows it to translate in said groove (36) but not to rotate to allow the nut (53) to be tightened,
said counterframe (24) furthermore including:
- first hydraulic means (3) constrained to some second plates (55) for raising from the counterframe (24) and lowering on the counterframe (24) said interchangeable body while maintaining its horizontal position;
- second hydraulic means (11) fixed to said cross member (27) by means of fixing means (11a, 12, 12a), said second hydraulic means (11) being able to activate a mechanism (13, 14) for moving said interchangeable body lengthwise the side members (25, 26), in either a direction or the opposite one, to fix said interchangeable body to said anchoring means (7, 8).

2. Counterframe as in claim 1, **characterized in that** second plates (7) are constrained to respective pins (8) parallel to the side member (25, 26) for attachment to respective brackets (6) fixed to the body.

3. Counterframe as in claim 2, **characterized in that** other second plates (33) matchable to said means (33v) for fixing said joining means (32, 33) and said anchoring means (7, 8) slidable inside at least a second longitudinal groove (36) along the entire length of a second side, opposed to the first one, of the side members (26, 25), are bent at 90° to engage said frame (2) as a thrust block.

4. Counterframe as in claim 1, **characterized in that** it includes four drilled corner-boxed angles (28, 29, 30, 31) joinable to said cross member (27) and to said side members (25, 26) by said means (28v, 29v, 30v, 31v) for fixing said joining means (32, 33) and said anchoring means (7, 8) slidable inside at least a second longitudinal groove (36) along the entire length of a second side, internal to the counterframe, of the side members (26, 25).

5. Counterframe as in claim 1, **characterized in that** some second plates (57) are constrained to supporting means (56) of at least a plate (20) which includes a hydraulic fast-release half-joint (20) matchable to a complementary hydraulic fast-release half-joint constrained to said interchangeable body, by effect of the thrust exerted by the second hydraulic means (11).

6. Counterframe as in claim 1, **characterized in that**:
- said cross member (63) has its ends constrained to said second plates (64) matchable to said means (33v) for fixing said joining means (32, 33) and said anchoring means (7, 8) slidable inside at least a second longitudinal groove (36) along the entire length of a second side, internal to the counterframe, of the side members (26, 25);
- said cross member (63) supports a plate (20) which includes a hydraulic fast-release half-joint matchable to a complementary hydraulic fast-release half-joint constrained to said interchangeable body, by effect of the weight of the interchangeable body lowered by the first hydraulic means (3);
- other second plates (66) matchable to said means (8v) for fixing said joining means (32, 33) and said anchoring means (7, 8) are constrained to means (67) for blocking the interchangeable bodies manually operated.

## Patentansprüche

1. Modulares Gegenrahmen (24), der mit dem Rahmen (2) eines Lastwagens (1) für den Transport eines austauschbaren Körpers verbunden ist, wobei der besagte Gegenrahmen (24) mit dem besagten auswechselbaren Körper befestigbar ist und umfasst:
- ein Paar von Seitenelementen (25, 26), die jeweils mindestens eine längliche Nut (36) über die gesamte Länge von einer ersten Seite umfassen;
- mindestens ein Querglied (27, 63), das orthogonal zu den beiden Seitenelementen (25, 26) verbunden ist;
- Mittel (32, 33) um den Rahmen (2) mit den Seitenelementen (25, 26) zu verbinden;
- Mittel (7, 8) um den besagten auswechselbaren Körper mit den Seitenelementen (25, 26) zu verankern;
- Mittel (32v, 8v, 33) zum Befestigen der besagten Verbindungsmittel (32, 33) und der besagten Verankerungsmittel (7, 8) mit den Seitenelementen (25, 26), wobei die besagten Mittel (32v, 8v, 33v) zum Befestigen der besagten Verbindungsmittel (32, 33) und der besagten Verankerungsmittel (7, 8) derart ausgestattet sind, um sich quer in die besagte Nut (36) zu bewegen, ohne von dieser abzuweichen zu müssen, indem sie sich bei den besagten Verbindungsmitteln (32, 33) und bei den besagten Verankerungsmitteln (7, 8) positionieren,
wobei der besagte Gegenrahmen (24) derart gekennzeichnet ist, dass die besagten Verankerungsmittel erste gebohrte Platten (32) umfassen, die mit dem besagten Rahmen (2) befestigbar und mit den besagten Mitteln (32v) gekoppelt werden, um die besagten Verbindungmittel (32, 33) und die besagten Verankerungsmittel (7, 8) zu befestigen, wobei die besagten Verankerungsmittel zweite gebohrte Platten (7, 33) umfassen, die mit den besagten Mitteln (8v, 33v) zum Befestigen der besagten Verbindungsmittel (32, 339 und der besagten Verankerungsmittel (7, 8) gekoppelt sind,
wobei die besagten Mittel (32v, 8v, 33v) zum Befestigen der besagten Verbindungmittel (32, 33) und der besagten Verankerungsmittel (7, 8) Schrauben und Muttern sind, wobei der Kopf (51, 51a) der Schrauben eine prismatische Kontur aufweist, die ermöglicht, ihn innerhalb der besagten Nut (36) zu bewegen, aber nicht zu drehen, um das Ziehen der Mutter (53) zu ermöglichen,
wobei der besagte Gegenrahmen (24) ferner umfasst:
- erste hydraulische Mittel (3) die mit einigen zweiten Platte (55) verbunden sind, um aus dem Gegenrahmen (24) und auf dem Gegenrahmen (24) den besagten austauschbaren Körper zu heben und zu senken, indem er seine horizontale Lage hält;
- zweite hydraulische Mittel (11) die mit dem besagten Querglied (27) durch Befestigungsmittel (11a, 12, 12a) befestigt sind, wobei die besagten zweiten hydraulische Mittel (11) in der Lage sind, einen Mechanismus zu (13, 14) zu betätigen zur Bewegung des besagten auswechselbaren Körpers in Längsrichtung in Bezug auf die Seitenelemente (25, 26) in eine Richtung oder in die entgegengesetzte Richtung, um den besagten austauschbaren Körper mit den besagten Verankerungsmittel (7, 8) zu befestigen.

2. Gegenrahmen nach Anspruch 1, **dadurch gekennzeichnet, dass** zweite Platten (7) mit entsprechenden Stiften (8) befestigt sind und sich parallel zum Seitenelementen (25, 26) erstrecken, um eine Befestigung an entsprechenden an dem Körper befestigten Halterungen (6) durchzuführen.

3. Gegenrahmen nach Anspruch 2, **dadurch gekennzeichnet, dass** weitere zweite Platten (33) an den besagten Mitteln (33v) angepasst werden können, um die besagten Verbindungsmittel (32, 33) und die besagten Verankerungsmittel (7, 8) die mindestens auf der Innenseite einer zweiten länglichen Nut (36) für die gesamte Länge einer zweiten Seite gegenüber der ersten der Seitengleitelemente (26, 25) gleiten können, um 90° derart gebogen sind, um mit dem besagten Rahmen (2) nach Art eines Schubblockes in Verbindung zu kommen.

4. Gegenrahmen nach Anspruch 1, **dadurch gekennzeichnet, dass** er vier aus Lochkanten hergestellten Ecken (28, 29, 30, 31) aufweist, die mit dem besagten Querglied (27) und mit den besagten Seitenelementen (25, 26) durch die besagten Mittel (28v, 29v, 30v, 31v) verbunden werden können, für die Befestigung der besagten Verbindungsmittel (32, 33) und der besagten Verankerungsmittel (7, 8) und in wenigstens einer zweiten länglichen Nut (36) für die gesamte Länge einer zweiten Seite gleiten können, die intern in Bezug auf den Gegenrahmen der Seitenelemente (26, 25) ist.

5. Gegenrahmen nach Anspruch 1, **dadurch gekennzeichnet , dass** einige zweite Platten (57) mit Mitteln (56) zur Unterstützung von mindestens einer Platte (20) ausgestattet sind, die eine hydraulische Schnellkupplungshälfte (20) aufweist, um sich schnell mit einer entsprechenden hydraulischen Schnellkupplung Hälfte zu verbinden, die mit dem besagten auswechselbaren Körper durch den Schub der zweiten hydraulischen Mittel (11), verbunden werden können (11).

6. Gegenrahmen nach Anspruch 1, **dadurch gekennzeichnet, dass**:
- das besagte Querglied (63) seine Enden aufweist, die mit den besagten zweiten Platten (64) verbunden und an den besagten Mittel (33v) angepasst sind, die zum Befestigen der besagten Verbindungsmittel (32, 33) und den besagten Verankerungsmittel (7, 8) verschiebbar und innerhalb mindestens einer zweiten länglichen Nut (36) für die gesamte Länge einer zweiten Seite gleiten können, die innerhalb des Gegenrahmens der Seitenelemente (26, 25), angeordnet ist;
- das besagte Querglied (63) eine Platte (20) stützt, die eine hydraulische Schnellkupplungshälfte aufweist, die sich an einer entsprechenden Schellkupplungshälfte anpasst, die mit dem besagten austauschbaren Körper verbunden ist, durch das Gewicht des besagten austauschbaren Körpers der von der ersten hydraulischen Mitteln (3) gesenkt wird;
- weitere zweite Platten (66) die an die besagten Mittel (8V) zum Befestigen der besagten Verbindungsmittel (32, 33) und der besagten Verankerungsmittel (7, 8) anpassbar und mit Mitteln (67) zur Verriegelung der manuell betätigten austauschbaren Körper, verbunden sind.

## Revendications

1. Contre-châssis modulaire (24) couplé au châssis (2) d'un camion (1) destiné à être aménagé pour le transport d'un corps interchangeable, ledit contre-châssis (24) pouvant être fixé à ladite carrosserie interchangeable, et comprenant:
- une paire d'éléments latéraux (25, 26) ayant chacun au moins une rainure longitudinale (36) sur toute la longueur d'un premier côté;
- au moins une traverse (27, 63) couplée orthogonalement aux deux éléments latéraux (25, 26);
- des moyens (32, 33) pour relier le châssis (2) aux éléments latéraux (25, 26);
- des moyens (7, 8) pour l'ancrage dudit corps interchangeable aux éléments latéraux (25, 26);
- des moyens (32v, 8v, 33v) pour fixer lesdits moyens (32, 33) et lesdits moyens d'ancrage (7, 8) aux éléments latéraux (25, 26), lesdits moyens (32v, 8v, 33v) pour fixer lesdits moyens de jonction (32, 33) et lesdits moyens d'ancrage (7, 8) étant en gré de se déplacer dans ladite rainure (36) sans se départir de la présente transversalement, en se positionnant au niveau desdits moyens de jonction (32, 33) et au niveau desdits moyens d'ancrage (7, 8),
ledit contre- châssis (24) étant **caractérisé en ce que** lesdits moyens de jonction comprennent des premières plaques perforées (32) pouvant être fixées audit châssis (2) et couplées auxdits moyens (32v) pour fixer lesdits moyens de jonction (32, 33) et lesdits moyens d'ancrage (7, 8),
lesdits moyens d'ancrage comprennent des deuxièmes plaques perforées (7, 33) pour être couplées auxdits moyens (8v, 33v) pour fixer lesdits moyens de jonction (32, 33) et lesdits moyens d'ancrage (7, 8),
lesdits moyens (32v, 8v, 33v) pour fixer lesdits moyens de jonction (32, 33) et lesdits moyens d'ancrage (7, 8) étant des vis et des écrous, la tête (51, 51a) des vis ayant un profil prismatique permettant de la déplacer dans ladite rainure (36), mais pas de tourner, de manière à permettre de serrer l'écrou (53),
ledit contre-châssis (24) comprenant en outre:
- des premiers moyens hydrauliques (3) attachés à quelques deuxièmes plaques (55) pour soulever due contre-châssis (24) et abaisser sur le contre-châssis (24) ledit corps interchangeables, en gardant sa position horizontale;
- des deuxièmes moyens hydrauliques (11) fixés audit élément transversal (27) par des moyens de fixation (11a, 12, 12a), lesdits deuxièmes moyens hydrauliques (11) étant en gré d'activer un mécanisme (13, 14) pour déplacer ledit corps interchangeable dans la direction longitudinale par rapport aux éléments latéraux (25, 26), dans une direction ou dans la direction opposée, afin de fixer ledit corps interchangeable auxdits moyens d'ancrage (7, 8).

2. Contre-châssis selon la revendication 1, **caractérisé en ce que** des deuxièmes plaques (7) sont fixées à des broches respectives (8) parallèles à l'élément latéral (25, 26) pour une fixation à des supports respectifs (6) fixés sur le corps.

3. Contre-châssis selon la revendication 2, **caractérisé en ce que** des autres deuxièmes plaques (33) peuvent être couplées auxdits moyens de jonction (32, 33) et auxdits moyens d'ancrage (7, 8) avec possibilité de glissement à l'intérieur d'une deuxième rainure longitudinale (36) sur toute la longueur d'un deuxième côté opposé au premier, des éléments latéraux (26, 25), sont pliés à 90° pour s'engager avec ledit châssis (2) en manière d'un bloc de poussée.

4. Contre-châssis selon la revendication 1, **caractérisé en ce qu'**il comprend quatre coins (28, 29, 30, 31) des bords perforés qui peuvent être reliés au dit élément transversal (27) et auxdits éléments latéraux (25, 26) par lesdits moyens (28v, 29v, 30v, 31v) pour la fixation desdits moyens de jonction (32, 33) et desdits moyens d'ancrage (7, 8) qui peuvent coulisser dans au moins une seconde rainure longitudinale (36) sur toute la longueur d'un deuxième côté interne par rapport au contre- châssis, des éléments latéraux (26, 25).

5. Contre-châssis selon la revendication 1, **caractérisé en ce que** des deuxièmes plaques (57) sont fixées à des moyens de support (56) d'au moins une plaque (20), qui comprend un demi-accouplement hydraulique (20) à libération rapide, qui peut être couplé à un demi-accouplement hydraulique complémentaire à libération rapide fixé audit corps interchangeable, en raison de la poussée exercée par les deuxièmes moyens hydrauliques (11).

6. Contre-châssis selon la revendication 1, **caractérisé en ce que**:
- ledit élément transversal (63) a ses extrémités fixées auxdites deuxièmes plaques (64) qui peuvent s'adapter auxdits moyens (33v) pour fixer lesdits moyens de jonction (32, 33) et lesdits moyens d'ancrage (7, 8) pouvant coulisser à l'intérieur d'au moins une deuxième rainure longitudinale (36) sur toute la longueur d'un deuxième côté, interne au contre-châssis, des éléments latéraux (26, 25);
- ledit élément transversal (63) supporte une plaque (20) qui comprend un demi-accouplement hydraulique à libération rapide adaptable à demi-accouplement hydraulique à libération rapide complémentaire fixé audit corps interchangeable, en raison du poids du corps interchangeable abaissé par les premiers moyens hydrauliques (3);
- des autres deuxièmes plaques (66) adaptables aux dits moyens (8v) pour fixer lesdits moyens de jonction (32, 33) et lesdits moyens d'ancrage (7, 8) sont fixés à des moyens (67) pour bloquer les corps interchangeables à commande manuelle.
